# EUROPÄISCHE PATENTSCHRIFT

(11) **EP 0 941 425 B1**
(45) Veröffentlichungstag und Bekanntmachung des Hinweises auf die Patenterteilung: **19.12.2001**
(21) Anmeldenummer: 96942277.3
(22) Anmeldetag: 29.11.1996
(51) Int. Cl.: F16F 9/02, F16F 9/36

(54) **FEDERUNGSEINHEIT, INSBESONDERE FÜR STRASSEN- UND SCHIENENFAHRZEUGE**
SUSPENSION UNIT, ESPECIALLY FOR ROAD AND RAIL VEHICLES
UNITE DE SUSPENSION, NOTAMMENT POUR VEHICULES ROUTIERS ET VEHICULES SUR RAILS

(43) Veröffentlichungstag der Anmeldung: 15.09.1999
(73) Patentinhaber: Festo AG & Co, 73734 Esslingen (DE)
(72) Erfinder: VARADI, Jánosné, H-1145 Budapest (HU)
(74) Vertreter: Abel, Martin, Dipl.-Ing.
(86) Internationale Anmeldenummer: EP9605291
(87) Internationale Veröffentlichungsnummer: WO9823878

(56) Entgegenhaltungen:
- EP-A- 0 697 540
- DE-A- 1 902 323
- DE-C- 4 240 686
- GB-A- 998 227

## Beschreibung

Die Erfindung betrifft eine Federungseinheit, insbesondere für Straßen- und Schienenfahrzeuge, mit einem Zylinder, einem darin axial beweglich angeordneten Kolben und einer Einrichtung zur Beaufschlagung des Zylinders mit zumindest im wesentlichen konstantem Druck.

Die Federung ist ein unentbehrlicher Bauteil zeitgemäßer Fahrzeuge, weil bei den heute üblichen Geschwindigkeiten die von den Straßenunebenheiten hervorgerufenen dynamischen Kräfte um ein bis zwei Größenordnungen stärker sind als die statischen Kräfte. Diese Stoßkräfte werden von der Federung wirksam gemildert, und ihre Wirksamkeit wächst mit der Geschwindigkeit. Allerdings werden Schwingungen hervorgerufen, die Fahrzeughöhe ist nicht konstant, und es treten Nick-und Kippschwingungen auf.

Eine in Straßen- oder Schienenfahrzeugen zur Anwendung kommende Federungseinheit der eingangs genannten Art ist beispielsweise in dem ungarischen Lehrbuch "Váradi-Komándi: Traktorok-autók, Mezógazdasági, Kiadó, Budapest 1980, pp. 170 - 188, zu finden.

Mit einer weichen Federung ist zwar ein besserer Fahrkomfort zu erreichen, doch werden auch die unerwünschten Nebenwirkungen stärker. Aus diesem Grunde ist in der Automobiltechnik der Einbau mehrerer Zusatzeinrichtungen nötig, beispielsweise Schwingungsdämpfer und Stabilisatoren. Bei Schienenfahrzeugen ist aus Stabilitätsgründen nur eine harte Federung anwendbar.

Eine Möglichkeit der Beseitigung dieser Nachteile bietet die elektronisch gesteuerte hydraulische oder hydropneumatische Aktivfederung, die aber eher für die Höhenverstellung und für die Schwingungsdämpfung wirksam ist. Für die Stoßkräfte ist die zeitliche Verzögerung nicht kurz genug.

Aus der DE 37 14 363 A1 geht bereits eine mechanische, selbststabilisierende Federungseinheit hervor, die über drei Betriebsphasen verfügt und mit der die Problematik bereits grundsätzlich gelöst werden könnte, und zwar im Gegensatz zur Aktivfederung ohne Zeitverzögerung. Die gewünschte weiche Charakteristik ist jedoch mit Stahlfedern nur gering zu verwirklichen.

Der Erfindung liegt somit die Aufgabe zugrunde, eine Federungseinheit zu schaffen, die beim Einsatz in Straßen- oder Schienenfahrzeugen gegen Schwerkräfte und Massenkräfte eine starre Unterstützung gibt, im Falle der von den Straßenunebenheiten verursachten dynamischen Kräfte jedoch einen nur kleinen Widerstand leistet und große Federwege ermöglicht.

Zur Lösung dieser Aufgabe ist erfindungsgemäß vorgesehen, daß radial zwischen dem Zylinder und dem Kolben eine bezüglich beiden Teilen axial bewegliche, ringförmige Dichtung angeordnet ist, die auf ihrer einen Axialseite von dem im Zylinder herrschenden Druck beaufschlagt und deren entgegengesetzter Axialseite zwei ringförmige, in Axialrichtung gesehen konzentrisch angeordnete Abstützflächen mit unterschiedlichem Durchmesser gegenüberliegen, wovon die eine mit größerem Durchmesser am Zylinder und die andere mit geringerem Durchmesser am Kolben angeordnet ist, derart, daß die Dichtung bei einfahrendem Kolben von der an diesem vorgesehenen Abstützfläche entgegen den auf die Dichtung einwirkenden Druckkräften axial ins Zylinderinnere mitgenommen und bei ausfahrendem Kolben von der am Zylinder vorgesehenen Abstützfläche zurückgehalten wird.

Auf diese Weise liegt eine Federungseinheit vor, die infolge ihrer Wirkungsweise als Dreiphasen-Federungseinheit bezeichnet werden könnte. Die Federungseinheit ist gegen Schwerkräfte und horizontale Massenkräfte verhältnismäßig starr und kann gegenüber vertikalen Stößen mit konstanter Kraft ausweichen. Die Lösung der Aufgabe beruht auf der Erkenntnis, daß sich die Stoßkräfte in einer anderen Größenordnung bewegen als die statischen Kräfte und ihre Dauer in der Größenordnung von 1/100 sec. liegt. Wenn die Aufhängung bei höheren Kräften, die zur statischen Unterstützung und zur Aufnahme der Nick- und Kippmomente nötig sind, ohne weitere Zunahme ausweichen kann, wird die Wirkung der Fahrbahnstöße auf das Fahrzeug bei mäßigen Kräften und kurzer Zeitdauer minimal. In der Regel arbeitet die Federungseinheit dergestalt, daß sich der Kolben bei statischer Belastung in seiner Mittellage befindet. Bei erhöhter Kraft bewegt er sich zusammen mit der ringförmigen, beweglichen Dichtung gegen den Druck im Zylinder axial nach innen. Bei Kräften kleiner als die statische Belastung bleibt die ringförmige, bewegliche Dichtung in Normalposition, und der Kolben wird vom Druck im Zylinder axial nach außen bewegt. Auf diese Weise übt die Federungseinheit bei konstantem Luftdruck in einer Richtung eine größere, in der anderen Richtung eine kleinere Kraft aus, und in der Zwischenlage wird eine starre Unterstützung gewährleistet.

Zwar gehören bereits vielfältige Bauformen von Federungseinheiten zum Stand der Technik. Sie alle sind jedoch nicht geeignet, die eingangs genannte Aufgabe zu lösen.

So beschreibt die US 5 314 172 eine bei Pressen zur Anwendung gelangende, federnd nachgiebige Einheit, die einen Zylinder, einen Kolben sowie eine zwischen dem Zylinder und dem Kolben angeordnete Dichtung aufweist. Die ringförmige Dichtung ist jedoch fest mit dem Kolben verbunden und nicht in der Lage, Relativbewegungen sowohl bezüglich des Zylinders als auch bezüglich des Kolbens auszuführen.

Die US 5 129 635 beschreibt eine Gasfeder für Werkzeugmaschinen, bei der die Ausgestaltung von Dichtungen im Vordergrund steht, um bei hohen Drücken eine hohe Lebensdauer zu erreichen.

Die WO 94/25775 beschreibt eine Gasfeder, bei der die Federkraft durch adiabatische Zustandsänderung in nur einer Stufe erzielt wird. Dichtungen sind zwar vorhanden, jedoch axial feststehend ausgebildet.

Die DE 39 36 034 A1 beschreibt ein hydropneumatisches Federungssystem, welches die Zielsetzung hat, durch einen schwimmenden Kolben verschiedene Drücke in den pneumatischen und hydraulischen Teilen zu erzeugen.

Die DD 61 389 beschreibt eine Federungseinheit, die zur Aufnahme seitlicher Stöße bei Eisenbahnfahrzeugen konzipiert ist. Durch Volumenänderung eines Gasakkumulators ist eine stark progressive Charakteristik angestrebt. Der äußere Zylinder ist nur ein Ausgleichsbehälter.

Die DE 39 34 821 C2 beschreibt eine Luftfeder für Fahrzeuge mit einem Rollbalg, wobei wiederum die erfindungsgemäßen Merkmale nicht zur Anwendung gelangen.

Zur Erläuterung der Erfindung erfolgt nachstehend eine nähere Beschreibung zweier Ausführungsbeispiele, wobei auf die beiliegende Zeichnung Bezug genommen wird. In dieser zeigen:
- Fig. 1: eine erste Bauform der Federungseinheit in schematischer Darstellung,
- Fig. 2: ein Bewegungs-Kraft-Schaubild der Federungseinheit und
- Fig. 3: eine weitere Ausführungsform der Federungseinheit.

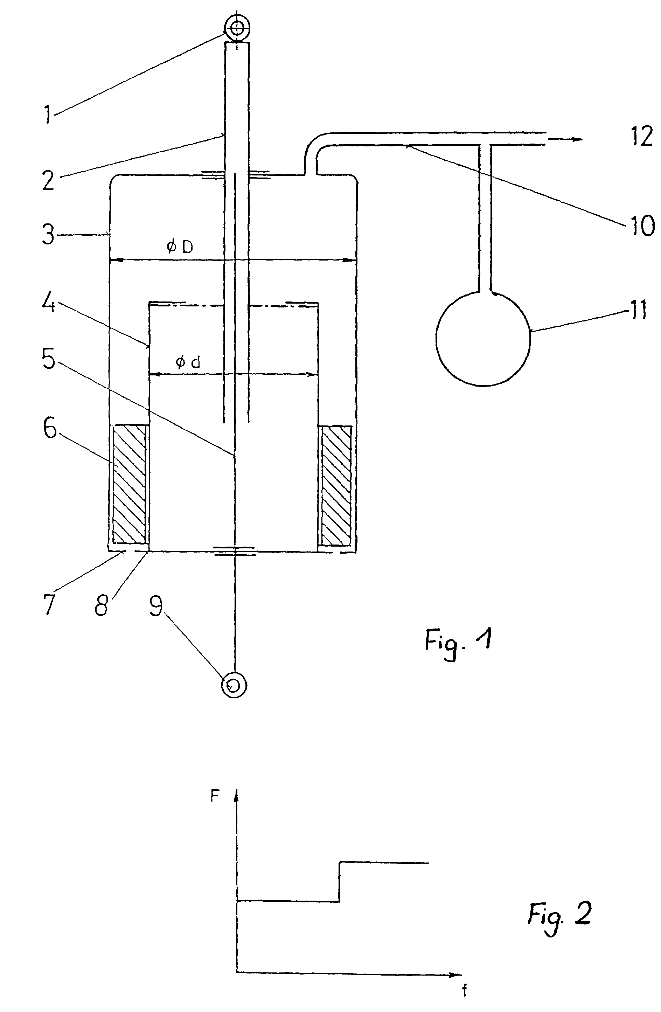

Die beispielsgemäß als Dreiphasen-Luftfedereinheit ausgeführte Federungseinheit gemäß Fig. 1 wird in den Punkten 1 und 9 zwischen Fahrzeugrahmen und Radachse eingebaut und mit einem von einer Stange gebildeten ersten Führungsteil 5 in einem von einem Rohr gebildeten zweiten Führungsteil 2 geführt. Ein Luftzylinder 3 ist mit dem Rohr 2 fest verbunden, ein Kolben 4 ist mit der Stange 5 fest verbunden. Der Luftzylinder 3 ist durch einen Schlauch 10 auf einen Druckakkumulator bzw. eine Druckregeleinrichtung 12 geschaltet, die einen konstanten Druck "p" liefert. Leckverluste werden von einem Kompressor 11 oder einem sonstigen Druckerzeuger ausgeglichen, im Falle eines hydraulischen Betriebes beispielsweise mittels einer Ölpumpe.

Im Luftzylinder 3 ist der an der Stange 5 befestigte, zylindrische Kolben 4 angeordnet. Der Kolben 4 ist beim Ausführungsbeispiel hohl ausgebildet und an der dem Inneren des Luftzylinders zugewandten, vorliegend oberen Axialseite offen, kann allerdings ohne weiteres auch geschlossen oder in Vollmaterial ausgeführt sein, was strichpunktiert angedeutet ist. Als Dichtung zwischen Kolben 4 und Zylinder 3 ist eine ringförmige, axial relativ zum Kolben 4 und zum Zylinder 3 bewegliche Dichtung 6 vorgesehen, die radial zwischen dem Kolben 4 und dem Zylinder 3 sitzt. Der Luftzylinder ist an einer Axialseite, vorliegend an der Unterseite, offen. Abgeschlossen ist er an dieser Axialseite durch den Kolben 4 und die auf diesem sitzende, sowohl bezüglich des Kolbens 4 als auch bezüglich des Zylinders 3 axial bewegliche Dichtung 6. Letzter stützt sich in der Mittellage an z. B. ringförmigen, axial gerichteten Abstützflächen 7, 8 des Zylinders 3 und des Kolbens 4 ab. Die Abstützflächen 7 bilden zweckmäßigerweise gleichzeitig Dichtungsflächen, weshalb sie nachfolgend als Abstütz- und Dichtungsflächen 7, 8 bezeichnet werden. Diese Abstütz- und Dichtungsflächen 7, 8 sind beispielsweise koaxial zueinander angeordnet und weisen in die gleiche axiale Richtung, und zwar in Richtung der Dichtung 6. Sie bilden Hubbegrenzer für die axial bewegliche Dichtung 6, die vom Druck "p" im Zylinder beaufschlagt und in Richtung der Flächen 7, 8 gedrückt wird. Sie befinden sich beispielsgemäß an den zwei einander zugeordneten Stirnseiten von Zylinder 3 und Kolben 4 im Bereich der offenen Axialseite des Zylinders 3. Während der Bewegung nach oben oder unten sind die mit der Dichtung zusammenwirkenden Dichtungsflächen die äußere Umfangsfläche des Kolbens 4 und die innere Zylinderfläche des Zylinders 3.

Die Federungseinheit befindet sich in der Mittellage gemäß Fig. 1, soweit die Kraft zwischen den Punkten 1, 9 kleiner ist als D²πp/4, aber größer ist als d²πp/4. In diesem Bereich der Kräfte ergibt sich eine starre Unterstützung.

Bei vergrößerter Kraft, in Fig. 1 in Richtung nach oben, also in Einfahrrichtung des Kolbens 4, bewegen sich Punkt 9, Stange 5, Kolben 4 sowie die von der Abstütz- und Dichtungsfläche 8 des Kolbens 4 beaufschlagte, bewegliche Dichtung 6, die auf Fläche 8 aufliegt, nach oben, und das Rad kann den Straßenunebenheiten ohne weitere Erhöhung der Kraft folgen. Danach wird das Rad mit kostanter Kraft auf die Fahrbahn gedrückt. Da die ungefederten Masen nur ein Bruchteil der gefederten Massen sind, geschieht das in kürzester Zeit.

Bei einer Vertiefung in der Fahrbahn wird die Kraft zwischen 1, 9 Punkten kleiner, und unter einem gewissen Wert wird der Kolben 4 vom Druck "p" im Ausfahrsinne nach unten in Bewegung gesetzt. Die bewegliche Dichtung 6 liegt dabei auf der ringförmigen Fläche 7 des Zylinders auf und arbeitet an der inneren Zylinderfläche des Zylinders 3. Der Kolben fährt relativ zum Zylinder 3 und zu der Dichtung 6 nach unten aus. Das Rad kann die Fahrbahn kopieren mit einem konstanten Minimalwert der Unterstützung.

Bei einem Fahrbahnprofil, bei dem sich der Kolben 4 im Luftzylinder 3 in rascher Reihenfolge nach oben und nach unten bewegt, werden auf den Wagenaufbau keine Ströße weitergegeben, weil nur die bewegliche Dichtung 6 entsprechende Bewegungen ausführt.

Das Bewegungs-Kraft-Schaubild der Dreiphasen-Luftfederungseinheit nach Fig. 1 wird in Fig. 2 gezeigt.

Ergänzend sei nochmals ein bevorzugter Aufbau des Luftzylinders kurz zusammengefaßt. Demnach ist das Führungsrohr 2 oben mit einem Fahrgestell durch Bolzen 1 und die Führungsstange 5 unten mit einer Radachse durch Bolzen 9 verbunden. Im Luftzylinder 3, der mit dem Rohr 2 zusammengebaut ist, kann sich, insbesondere durch die Bauteile 2, 5 geführt, der zumindest an der Unterseite geschlossene und an der Stange 5 befestigte hohle Kolben 4 kolbenartig bewegen. Zwischen dem Zylinder 3 und dem Kolben 4 ist eine relativ zu beiden Teilen axial bewegliche Dichtung 6 angeordnet. Dichtungsflächen sind in der Normallage axiale Kreisringflächen 7 und 8 am unteren Endbereich von Zylinder 3 und Kolben 4, während der Bewegungen die äußere Kolbenfläche und die innere Zylinderfläche. Der Zylinder 3 ist mit der Rohrleitung 10 an einen Druckakkumulator 12 angeschlossen. Die Leckverluste werden von der Pumpe 11 ersetzt. Daraus resultiert eine Arbeitsweise derart, daß sich bei statischer Belastung der Kolben 4 in Grundstellung nach Fig. 1 befindet. Bei Stoßkräften bewegen sich der Kolben 4 und die bewegliche Dichtung 6 nach oben. Der Federweg ist nur durch die Abmessungen begrenzt, die Federkraft ist konstant: D²πp/4. Rollt das Rad über ein Schlagloch, so bewegt sich der Kolben 4 nach unten, und die bewegliche Dichtung 6 stützt sich an der Dichtungsfläche 7 des Zylinders 3 ab. Der Federweg ist nur durch die Abmessungen begrenzt, die Federkraft ist konstant: d²πp/4. Hierbei ist "D" der Durchmesser des Zylinders 3 und "d" der Durchmesser des Kolbens 4. Bei dieser Federung ist zwischen Radachse und Fahrgestell keine mechanische Unterstützung vorhanden, sondern nur ein Luftpolster.

Auch bei raschen Bewegungen der Radachse nach oben und unten ergeben sich keine Schläge, nur die bewegliche Dichtung 6 wird davon betroffen. Mit Hilfe des Druckes "p" kann die Federung an die Belastung angepaßt werden.

Durch diese technische Ausführung kann die gestellte Aufgabe gelöst werden: minimale vertikale Bewegungen des Fahrzeuges, während die Räder frei und ohne zeitliche Verspätung auf der Fahrbahn abrollen. Die Wagenhöhe ist belastungsunabhängig, es gibt keine Nick- und Kippbewegungen.

Schon mit mäßigen Arbeitsdrücken (etwa 0,5 MPa) ist der Einbauraum mit dem der üblichen Schraubenfeder zu vergleichen. Stoßdämpfer und Stabilisatoren sind nicht nötig. Auch Spezialmaterialien, wie z. B. Federstahl, sind unnötig.

Das System kann auch hydropneumatisch ausgeführt werden. In diesem Falle sind die Arbeitszylinder hydraulisch, es ist eine ölpumpe und ein gastgefüllter Druckakkumulator in die Anlage eingebaut.

Bei Fahrzeugen, bei denen die Belastung im Verhältnis zum Eigengewicht stark variabel ist, z. B. Stadtomnibussen, Lastautos, Güterwagen, kann mit Regelung des Arbeitsdruckes "p" eine belastungsunabhängige, optimale Federung erzielt werden.

Zu berücksichtigen ist zwar gegenüber mechanischen Federungssystemen der Energieverbrauch des Kompressors. Normalerweise sind allerdings nur die Leckverluste zu decken. Das ist mit dem höheren Energieverbrauch der Aktivsysteme nicht zu vergleichen.

Zusammenfassend kann nochmals festgehalten werden, daß insbesondere eine Federungseinheit vorgeschlagen wird, die einen Zylinder 3 mit konstantem Druck mit darin untergebrachtem Kolben 4 aufweist, wobei dazwischen eine ringförmige, bewegliche Dichtung 6 angeordnet ist. Die bewegliche Dichtung 6 kann sich am Zylinder 3 und Kolben 4 mittels ringförmigen Dichtflächen 7, 8 abstützen. Aus der Mittellage kann sich der Kolben 4 zusammen mit der beweglichen Dichtung 6 in einer Richtung bewegen, in Gegenrichtung bewegt sich der Kolben 4 nur allein.

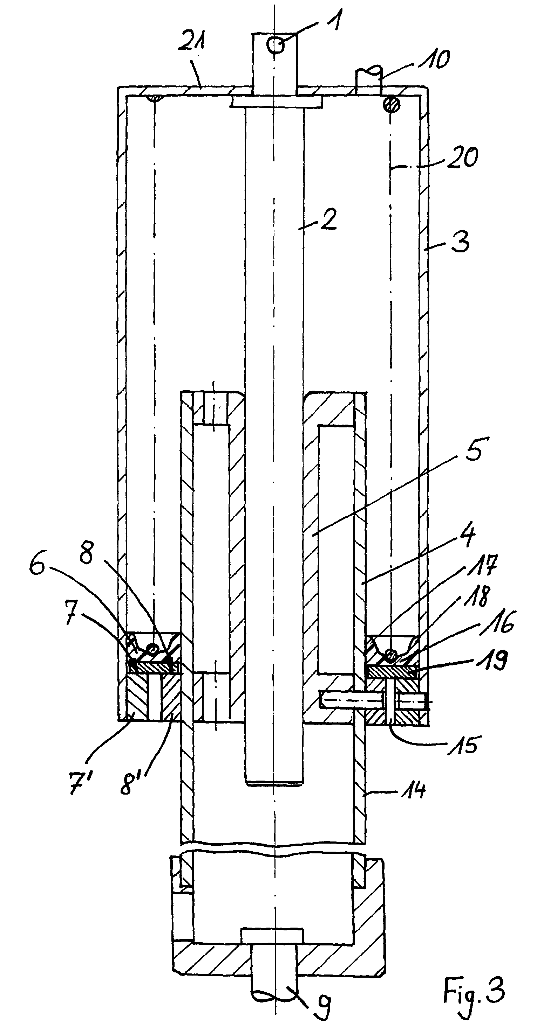

Aus Fig. 3 geht eine weitere Federungseinheit hervor, die auf dem gleichen Wirkprinzip wie die Federungseinheit gemäß Fig. 1 basiert, so daß entsprechende Bauteile mit identischen Bezugszeichen versehen sind.

In Abweichung zur Ausführungsform gemäß Fig. 1 ist allerdings das mit Punkt 1 verbundene zweite Führungsteil 2 als Stange ausgebildet, und das damit zusammenwirkende, mit dem Punkt 9 in Verbindung stehende erste Führungsteil 5 hat eine rohrähnliche Gestalt und ist auf dem stangenförmigen zweiten Führungsteil 2 axial verschieblich geführt. Das erste Führungsteil 5 ist fest mit dem Kolben 4 verbunden und beispielsgemäß innerhalb des Kolbens 4 festgelegt. Der Kolben 4 hat hohlzylindrische Gestalt und ragt unten mit einem Verlängerungsabschnitt 14 aus dem Zylinder 3 hinaus.

Die eine Abstützfläche 7 größeren Durchmessers ist an dem rohrförmigen Zylinder 3 angeordnet und erstreckt sich radial einwärts. In Axialrichtung gesehen konzentrisch innerhalb dieser einen Abstützfläche 7 ist die andere Abstützfläche 8 vorgesehen, die fest mit dem Kolben 4 verbunden ist und sich radial auswärts erstreckt. Beispielsgemäß befinden sich die Abstützflächen 7, 8 an Ringelementen 7', 8', die in koaxialer Anordnung an dem Zylinder 3 und an dem Kolben 4 angebracht sind. Radial zwischen den Ringelementen 7', 8' verbleibt ein Ringspalt 15.

Die radial zwischen der Außenfläche des Kolbens 4 und der Innenfläche des Zylinders 3 angeordnete, axial bewegbare, ringförmige Dichtung 6 hat beim Ausführungsbeispiel gemäß Fig. 3 einen mehrteiligen Aufbau. Sie umfaßt einen ringförmigen Dichtkörper 16, der mit ringförmigen Dichtpartien 17, 18 an den vorerwähnten Umfangsflächen des Kolbens 4 und des Zylinders 3 dichtend und axial gleitfähig anliegt. Die Dichtpartien 17, 18 können lippenartig ausgebildet sein, so daß sie von dem im Innern des Zylinders 3 herrschenden Druck gegen die Außenfläche des Kolbens 4 und die Innenfläche des Zylinders 3 angedrückt werden. Bei dem gezeigten Ausführungsbeispiel arbeitet der ringförmige Dichtkörper 16 nicht unmittelbar mit den Abstützflächen 7, 8 zusammen, es ist vielmehr dem Dichtkörper 16 axial in Richtung zu diesen Flächen 7, 8 ein zweckmäßigerweise in Baueinheit mit dem Dichtkörper 16 ausgebildeter ringförmiger Abstützkörper 19 vorgelagert, der mit den Abstützflächen 7, 8 zusammenarbeitet.

Der beispielsgemäße Dichtkörper 16 bildet praktisch einen ringförmigen Kolbenkörper, an dem in einstückiger Bauweise die ringförmigen Dichtpartien 17, 18 angeformt sind. Denkbar wäre es aber auch, einen starren, beispielsweise aus Metall bestehenden Kolbenkörper vorzusehen, der geeignet ausgebildete gummielastische Dichtpartien 17, 18 trägt.

Bei Bedarf kann noch vorgesehen sein, daß die axial bewegliche, ringförmige Dichtung 6 von einer mechanischen Federeinrichtung 20 axial in Richtung zu den Abstützflächen 7, 8 beaufschlagt ist. Eine entsprechende Federeinrichtung 20 ist in Fig. 3 gezeigt und besteht dort aus einer Schraubendruckfeder, die sich im Innern des Zylinders 3 zwischen der Dichtung 6 und der dieser auf der den Abstützflächen 7, 8 entgegengesetzten Seite axial gegenüberliegenden Abschlußwand 21 des Zylinders 3 abstützt.

## Patentansprüche

1. Federungseinheit, insbesondere für Straßen- und Schienenfahrzeuge, mit einem Zylinder (3), einem darin axial beweglich angeordneten Kolben (4) und einer Einrichtung (11, 12) zur Beaufschlagung des Zylinders (3) mit zumindest im wesentlichen konstantem Druck, **dadurch gekennzeichnet, daß** radial zwischen dem Zylinder (3) und dem Kolben (4) eine bezüglich beiden Teilen (3, 4) axial bewegliche, ringförmige Dichtung (6) angeordnet ist, die auf ihrer einen Axialseite von dem im Zylinder (3) herrschenden Druck beaufschlagt ist und deren entgegengesetzter Axialseite zwei ringförmige, in Axialrichtung gesehen konzentrisch angeordnete Abstützflächen (7, 8) mit unterschiedlichem Durchmesser gegenüberliegen, wovon die eine (7) mit größerem Durchmesser am Zylinder (3) und die andere (8) mit geringerem Durchmesser am Kolben (4) angeordnet ist, derart, daß die Dichtung (6) bei einfahrendem Kolben (4) von der an diesem vorgesehenen Abstützfläche (8) entgegen den auf die Dichtung (6) einwirkenden Druckkräften axial ins Zylinderinnere mitgenommen und bei ausfahrendem Kolben (4) von der im Zylinder (3) vorgesehenen Abstützfläche (7) zurückgehalten wird.

2. Federungseinheit nach Anspruch 1, **dadurch gekennzeichnet, daß** die Abstützflächen (7, 8) gleichzeitig als Dichtflächen wirken, die mit der sich an ihnen abstützenden, axial beweglichen, ringförmigen Dichtung (6) dichtend zusammenarbeiten können.

3. Federungseinheit nach Anspruch 1 oder 2, **dadurch gekennzeichnet, daß** die axial bewegliche, ringförmige Dichtung (6) von einer mechanischen Federeinrichtung (20) axial in Richtung zu den Abstützflächen (7, 8) beaufschlagt ist.

4. Federungseinheit nach einem der Ansprüche 1 bis 3, **dadurch gekennzeichnet, daß** die axial bewegbare, ringförmige Dichtung (6) einen gummielastischen, ringförmigen Dichtkörper (16) und einen dem Dichtkörper (16) in Richtung zu den Abstützflächen (7, 8) vorgelagerten ringförmigen Abstützkörper (19) aufweist.

5. Federungseinheit nach einem der Ansprüche 1 bis 4, **dadurch gekennzeichnet, daß** die axial bewegbare, ringförmige Dichtung (6) einen ringförmigen Kolbenkörper aufweist, an dem mit dem Zylinder (3) und dem Kolben (4) dichtend zusammenarbeitende, ringförmige Dichtpartien (17, 18) vorgesehen sind.

6. Federungseinheit nach einem der Ansprüche 1 bis 5, **dadurch gekennzeichnet, daß** der Zylinder (3) ein Luft- bzw. Pneumatikzylinder ist.

7. Federungseinheit nach einem der Ansprüche 1 bis 6, **dadurch gekennzeichnet, daß** der Zylinder (3) mit öl gefüllt ist.

8. Federungseinheit nach Anspruch 7, **dadurch gekennzeichnet, daß** die Einrichtung zur Beaufschlagung des Zylinders (3) mit konstantem Druck über einen als ölpumpe ausgebildeten Druckerzeuger (11) und einen eine Gasfüllung aufweisenden Druckakkumulator (12) verfügt.

9. Federungseinheit nach einem der Ansprüche 1 bis 8, **dadurch gekennzeichnet, daß** zwischen einerseits der ringförmigen, beweglichen Dichtung (6) und andererseits dem Zylinder (3) und/oder dem Kolben (4) von Rollbälgen gebildete Dichtpartien vorgesehen sind.

## Claims

1. Suspension unit, in particular for road and rail vehicles, with a cylinder (3), a piston (4) mounted therein so as to be axially movable, and a device (11, 12) for supplying the cylinder (3) with at least substantially constant pressure, **characterized in that** there is located radially between the cylinder (3) and the piston (4) an annular seal (6), axially movable relative to the two parts (3, 4) and exposed on one of its axial sides to the pressure prevailing in the cylinder (3), while on its opposite axial side it faces two annular support faces (7, 8) of differing diameter, arranged concentrically viewed in the axial direction, of which the one (7) with the larger diameter is located on the cylinder (3) and the other (8) with the smaller diameter is located on the piston (4) in such a way that the seal (6), when the piston (4) retracts, is carried axially into the interior of the cylinder by the support face (8) provided on the piston and against the compressive forces acting on the seal (6), and is held back by the support face (7) provided in the cylinder (3) when the piston (4) extends.

2. Suspension unit according to claim 1, **characterized in that** the support faces (7, 8) act simultaneously as sealing faces, capable of sealing in conjunction with the axially movable, annular seal (6) resting on them.

3. Suspension unit according to claim 1 or 2, **characterized in that** the axially movable, annular seal (6) is axially pressure-loaded towards the support faces (7, 8) by a mechanical spring unit (20).

4. Suspension unit according to any of claims 1 to 3, **characterized in that** the axially movable, annular seal (6) has a rubber-elastic annular sealing body (16), and an annular support body (19) mounted ahead of the sealing body (16) in the direction of the support faces (7, 8).

5. Suspension unit according to any of claims 1 to 4, **characterized in that** the axially movable, annular seal (6) has an annular piston body on which annular sealing sections (17, 18), sealing in conjunction with the cylinder (3) and the piston (4), are provided.

6. Suspension unit according to any of claims 1 to 5, **characterized in that** the cylinder (3) is an air or pneumatic cylinder.

7. Suspension unit according to any of claims 1 to 6, **characterized in that** the cylinder (3) is filled with oil.

8. Suspension unit according to claim 7, **characterized in that** the device for supplying the cylinder (3) with constant pressure has a pressure generator (11) in the form of an oil pump, and a pressure accumulator (12) with gas charge.

9. Suspension unit according to any of claims 1 to 8, **characterized in that** sealing sections formed by air bellows are provided between the annular movable seal (6) on the one hand, and the cylinder (3) and/or piston (4) on the other hand.

## Revendications

1. Ensemble de suspension, en particulier pour véhicules routiers et ferroviaires, comportant un cylindre (3), un piston (4) disposé déplaçable axialement dans celui-ci et un dispositif (11, 12) pour alimenter le cylindre (3) avec une pression au moins sensiblement constante, **caractérisé en ce qu'**il est prévu, radialement entre le cylindre (3) et le piston (4), une garniture d'étanchéité (6) de forme annulaire, déplaçable axialement par rapport aux deux éléments (3, 4), qui est sollicitée, sur l'un de ses côtés axiaux, par la pression régnant dans le cylindre (3) et au côté axial opposé de laquelle font face deux surfaces d'appui (7, 8) de diamètre différent, de forme annulaire, disposées concentriquement, vues dans la direction axiale, dont l'une (7) de plus grand diamètre est disposée sur le cylindre (3) et l'autre (8), de plus petit diamètre, est disposée sur le piston (4), de manière que, lorsque le piston (4) rentre, la garniture d'étanchéité (6) soit entraînée axialement, par la surface d'appui (8) prévue sur ce piston, à l'intérieur du cylindre, à l'encontre des forces de pression qui agissent sur la garniture d'étanchéité (6), et que lorsque le piston (4) sort, elle soit retenue par la surface d'appui (7), prévue dans le cylindre (3).

2. Ensemble de suspension selon la revendication 1, **caractérisé en ce que** les surfaces d'appui (7, 8) agissent en même temps comme surfaces d'étanchéité qui peuvent coopérer, de manière étanche, avec la garniture d'étanchéité (6) de forme annulaire, qui prend appui contre ces surfaces et qui est déplaçable axialement.

3. Ensemble de suspension selon la revendication 1 ou 2, **caractérisé en ce que** la garniture d'étanchéité (6) de forme annulaire, déplaçable axialement, est sollicitée axialement, en direction des surfaces d'appui (7, 8), par un dispositif mécanique à ressort (20).

4. Ensemble de suspension selon l'une des revendications 1 à 3, **caractérisé en ce que** la garniture d'étanchéité (6) de forme annulaire, déplaçable axialement, comporte un corps d'étanchéité (16) de forme annulaire, présentant l'élasticité du caoutchouc et un corps d'appui (19) de forme annulaire, placé devant le corps d'étanchéité (16), en direction des surfaces d'appui (7, 8).

5. Ensemble de suspension selon l'une des revendications 1 à 4, **caractérisé en ce que** la garniture d'étanchéité (6) de forme annulaire, déplaçable axialement, comporte un corps de piston de forme annulaire, sur lequel sont prévues des parties d'étanchéité (17, 18) de forme annulaire, qui coopèrent de manière étanche avec le cylindre (3) et le piston (4).

6. Ensemble de suspension selon l'une des revendications 1 à 5, **caractérisé en ce que** le cylindre (3) est un cylindre pneumatique.

7. Ensemble de suspension selon l'une des revendications 1 à 6, **caractérisé en ce que** le cylindre (3) est rempli d'huile.

8. Ensemble de suspension selon la revendication 7, **caractérisé en ce que** le dispositif de sollicitation du cylindre (3) par une pression constante comporte un générateur de pression (11), réalisé en tant que pompe à huile, et un accumulateur de pression (12) qui comporte un remplissage de gaz.

9. Ensemble de suspension selon l'une des revendications 1 à 8, **caractérisé en ce que** des parties d'étanchéité formées par des soufflets roulants sont prévues entre, d'une part, la garniture d'étanchéité (6) déplaçable, de forme annulaire et, d'autre part, le cylindre (3) et/ou le piston (4).
